# EUROPÄISCHE PATENTSCHRIFT

(11) **EP 0 555 254 B1**
(45) Veröffentlichungstag und Bekanntmachung des Hinweises auf die Patenterteilung: **29.12.1997**
(21) Anmeldenummer: 91918198.2
(22) Anmeldetag: 23.10.1991
(51) Int. Cl.: C08J 11/06

(54) **VERFAHREN ZUR AUFARBEITUNG VON LACKKOAGULATEN UND DEREN VERWENDUNG**
PROCESS FOR TREATING LACQUER COAGULATES AND THEIR USE
PROCEDE DE RECYCLAGE DE CAILLOTS DE LAQUE ET LEUR UTILISATION

(30) Priorität: 31.10.1990 DE 4034596
(43) Veröffentlichungstag der Anmeldung: 18.08.1993
(73) Patentinhaber: Henkel Kommanditgesellschaft auf Aktien, 40191 Düsseldorf (DE)
(72) Erfinder: GEKE, Jürgen, D-4000 Düsseldorf 1 (DE); HÜSEMANN, Lutz, D-5657 Haan (DE); REHM, Hans-Jörgen, D-4010 Hilden (DE)
(86) Internationale Anmeldenummer: EP9102006
(87) Internationale Veröffentlichungsnummer: WO9207900

(56) Entgegenhaltungen:
- EP-A- 0 376 020
- CH-A- 667 450
- DE-A- 3 412 763

## Beschreibung

Die Erfindung betrifft ein Verfahren zur Aufarbeitung (Recycling) von Lackkoagulaten, enthaltend Lackoverspray und schichtsilikathaltige Koagulationsmittel, bei dem das schichtsilikathaltige Lackkoagulat im Vakuum getrocknet, bei tiefen Temperaturen behandelt und anschließend zermahlen wird, sowie die Verwendung des aufgearbeiteten Lackkoagulates als Grundbestandteil, Zuschlags- oder Füllstoff in Lacken und Farben.

Bei der Aufbringung von Lacken, Wachsen oder ähnlichen, nicht wasserlösliche organische Substanzen enthaltenden Beschichtungsmaterialien auf metallische Oberflächen oder Kunststoffoberflächen, z.B. in der Automobilindustrie, gelingt es nicht, die Lacke bzw. Beschichtungsmaterialien restlos auf die zu beschichtenden Teile aufzubringen. Speziell bei der Lackierung von Kraftfahrzeug-Karosserien fällt in den Lackspritzkabinen sogenanntes "Overspray" an, das mittels Wasser aus den Lackspritzkabinen entfernt und in ein sogenanntes "Beruhigungsbecken" gespült wird. Um einerseits die Funktion der wasserführenden Leitungs-, Düsen - und Berieselungssysteme durch klebende Lackpartikel nicht zu stören und andererseits das umlaufende Wasser von den aufgenommenen Inhaltsstoffen zu entsorgen, müssen zur Koagulierung der genannten Stoffe dem Wasser Chemikalien zugegeben werden. Die Chemikalienzugabe sollte in einem Arbeitsgang die Entklebung der verspritzten und vom Wasser aufgenommenen Lackpartikel und deren Agglomeration zu einem austragungsfähigen Koagulat bewirken.

In jüngster Zeit sind angesichts eines wachsenden Umweltbewußtseins Überlegungen in Gange gekommen, die in den industriellen Beschichtungs- und Lackierungsanlagen anfallenden Lackkoagulate anstelle der Deponierung als wertvolle Rohstoffe in Recyclingstrategien zu verwerten. Außerdem steht eine Verschärfung der "Technischen Anleitung Abfall" kurz vor der Verabschiedung, die das Deponieren und den Export von Lackresten verbieten soll. Die jährlich anfallende Menge an Lackresten wird immerhin auf etwa 250 000 t pro Jahr geschätzt (VDI-Nachrichten vom 16.03.1990), so daß in der Wiederverwertung von Lackresten ein erhebliches Wertstoffpotential liegt.

Es hat nicht an Versuchen gefehlt, die Menge an anfallendem Overspray durch entsprechende Ausgestaltung der Spritzkabinen zu verringern, die über das Spritzkabinenwasser anfallenden Lackschlämme aufzubereiten oder diese in wirtschaftlich nutzbare Produkte umzuwandeln. So beschreibt die DE-A-32 27 227 ein Verfahren zu Rückgewinnung von Wasserlack aus dem beim Lackieren mit Naßlacken anfallenden Overspray, welches seit Jahren zum Stand der Technik bei der elektrophoretischen Verarbeitung von wasserlöslichen Elektrophoreselacken gehört. Die sogenannten Lösungsmittel-Lackabfälle können mit diesem Verfahren jedoch nicht aufbereitet werden.

Die in der US-A-43 03 559 beschriebene Verarbeitung von Lackschlämmen besteht im wesentlichen darin, den Schlamm zunächst zu vermahlen, die erhaltenen Fragmente zu trocknen und die getrockneten Fragmente wiederum zu vermahlen. Die in dieser Weise anfallenden Teilchen können dann beispielsweise zu Platten verpreßt und ausgehärtet werden, die dann zu Isolationszwecken eingesetzt werden können.

Weiterhin ist aus der Lehre der DE-C-35 25 254 ein Verfahren zur Wiederaufbereitung von Lackabfällen bekannt, bei dem die noch in vernetzbarer Form gesammelten Lackabfälle unter Zusatz von oberflächenaktiven Mitteln, insbesondere anionische, kationische, nichtionische oder amphotere oberflächenaktive Mittel bzw. Tenside, und unter Einwirkung mechanischer Kräfte in eine wäßrige Dispersion umgewandelt werden. Diese wäßrigen Dispersionen oder Emulsionen dienen nach Aushärten unter Wärme oder Druck als Entdröhnungsmaterialien sowie als Schall- bzw. Wärmeisolationsmaterialien.

Weiterhin ist aus dem obengenannten Artikel in den VDI-Nachrichten die Trocknung und Verwertung von Lackkoagulaten mit Hilfe eines "dry pur"-Konzeptes bekannt, das unter Vermeidung jeglicher Emissionen flüchtige Kohlenwasserstoffe aus den Lackschlämmen austreibt, und die verbleibenden Harze in ein geruchloses, ungiftiges Pulver verwandelt. Dieses Pulver hat einen Heizwert von etwa 21 000 KJ/kg und kann in Zementöfen oder Wärmeerzeugern eingesetzt werden.

In jüngster Zeit werden die ausgewaschenen Lackreste, insbesondere bei Sortenreinheit des Lackoverspray, in einem Kneter entwässert, mit Lösemittel aufgefüllt und unter Verwendung von Calciumchlorid als Fällungsmittel wiedereingesetzt. Infolge der bekannten korrosiven Wirkung von chloridhaltigen Verbindungen in der Automobilindustrie wird sich diese Methode vermutlich nicht durchsetzen.

Gegenstand der EP-A-0 376 020 ist ein Verfahren zur Herstellung eines Pulvers aus Lackreststoffen, wobei man dem Lackreststoff Wasser und organische Lösungsmittel entzieht und den erhaltenen Filterkuchen pulverisiert. Den Lackreststoffen werden Wasser und organische Lösungsmittel beispielsweise mittels Filterpresse, Zentrifugieren oder Abnutschen weitgehend entzogen. Der erhaltene Filterkuchen wird in möglichst kleine Agglomerate zerkleinert. Reste von Wasser und organischen Lösungsmitteln werden aus diesen Agglomeraten durch Erwärmen derselben entfernt. Die getrockneten Agglomerate werden anschließend pulverisiert. Das so hergestellte Pulver kann als Füllstoff wäßrigen Dispersionen oder Heißschmelzmassen zugesetzt werden. Derartige wäßrige Dispersionen können zur Beschichtung von Metalloberflächen dienen, insbesondere als Unterbodenschutz, Antidröhn oder Korrosionsschutz im Automobilbau. In entsprechender Weise können die erhaltenen Pulver auch zur Herstellung eines gefüllten Plastisols dienen, das gleichfalls zur Beschichtung von Metalloberflächen, insbesondere als Unterbodenschutz, Antidröhn, Korrosionsschutz, Nahtabdichtung oder Metallkleber im Automobilbau, Verwendung finden kann.

Die Aufgabe der vorliegenden Erfindung bestand nunmehr darin, ein Verfahren zur Aufarbeitung (Recycling) von schichtsilikathaltigen Lackkoagulaten zur Verfügung zu stellen, das insbesondere entklebte Lackkoagulate in einfacher Weise in eine wiederverwendbare Form überführt. Weiterhin sollte das aufgearbeitete Lackkoagulat so beschaffen sein, daß es als Grundbestandteil, Zuschlags- oder Füllstoff in Lacken und Farben eingesetzt werden kann.

Gegenstand der vorliegenden Erfindung ist dementsprechend ein Verfahren zur Aufarbeitung von Lackkoagulaten auf Basis von mit schichtsilikathaltigen Koagulationsmitteln in an sich bekannter Weise koaguliertem Lackoverspray, dadurch gekennzeichnet, daß man das schichtsilikathaltige, entklebte Lackkoagulat im Vakuum bei Temperaturen bis 100 °C trocknet, das getrocknete Lackkoagulat Temperaturen von 0 bis -270 °C unterwirft und unmittelbar anschließend das kalte, spröde Lackkoagulat zermahlt.

Im Rahmen der vorliegenden Erfindung werden die recycling-fähigen schichtsilikathaltigen Lackkoagulate aus Umlaufwässern oder Koagulationsseen von Lackentsorgungsanlagen durch Koagulation von Lacken, Wachsen und/oder anderen Beschichtungsmitteln, insbesondere Lackoverspray, mit schichtsilikathaltigen Koagulationsmitteln erhalten.

Schichtsilikathaltige Koagulationsmittel, die im Sinne der vorliegenden Erfindung eingesetzt werden können, sind beispielsweise die aus den US-Patentschriften 42 20 456, 43 80 495, 46 29 572, 45 04 395, 45 64 464 bzw. 47 01 220 und aus der EP-A-193 668 bekannten Lackkoagulationsmittel. Selbstverständlich lassen sich auch die in den deutschen Patentanmeldungen DE-A-40 25 729 und DE-A-40 25 730 der Anmelderin beschriebenen schichtsilikathaltigen Lackkoagulationsmittel einsetzen.

In einer bevorzugten Ausführungsform der vorliegenden Erfindung enthält das verwendete schichtsilikathaltige Koagulationsmittel:
a) 1 bis 100 Gew.-% wenigstens eines Alumosilikates,
b) 0 bis 30 Gew.-% wenigstens einer Kieselsäure oder ihrer Alkalimetall- und/oder Erdalkalimetallsalze,
c) 0 bis 30 Gew.-% wenigstens eines Erdalkalimetallsalzes,
d) 0 bis 10 Gew.-% eines Cyanamides, Dicyandiamides und/oder Calciumcyanamides,
e) 0 bis 10 Gew.-% eines protonierten oder kationisch modifizierten Polyethylenimins und
f) 0 bis 19 Gew.-% wenigstens eines Wirk- und/oder Hilfsstoffes, ausgewählt aus der von Molybdänverbindungen, Wachsen und/oder Wachsanaloga, Silikaten, Phosphaten, Emulgator- und/oder Dispergierhilfsmitteln, Entschäumern, Korrosionsinhibitoren, Bioziden, Säuren, Aminen und/oder Wasser gebildeten Gruppe.

Im Sinne der vorliegenden Erfindung enthalten die schichtsilikathaltigen Koagulationsmittel als Alumosilikat-Komponente(n) eine oder mehrere Verbindungen aus der Gruppe der Tonminerale auf Alkalimetall- und Erdalkalimetallalumosilikat-Basis, wobei solche Koagulationsmittel besonders bevorzugt sind, die Tonminerale auf Magnesiumalumosilikat-Basis enthalten. Dies bedeutet nichts anderes, als daß die Metallionen der zwischen den Silikatanionenschichten liegenden Kationenschichten Alkalimetall- oder Erdalkalimetallionen, besonders bevorzugt Magnesiumionen, sind.

In einer bevorzugten Ausführungsform enthalten die schichtsilikathaltigen Koagulationsmittel als Alumosilikatkomponente(n) ein oder mehrere Mineral(ien) aus der Gruppe Beidellit, Bentonit, Dickit, Halloysit, Hectorit, Kaolinit, Montmorillonit, Nakrit und Nontronit. Von diesen wiederum sind Bentonit oder Hectorit oder Mischungen der beiden Mineralien in beliebigem Mengenverhältnis besonders bevorzugt, da diese zu Koagulationsmitteln mit besonders guten Entklebungseigenschaften und gutem Koagulataustragevermögen führen.

Unter "Bentoniten" und "Hectoriten" werden hier wie in der folgenden Beschreibung und in den Patentansprüchen solche silikatischen Mineralien des oben beschriebenen Typs verstanden, die eine Mehrschichtenstruktur aufweisen, deren einzelne Schichten nicht starr miteinander verbunden sein müssen, sondern durch Einlagerung beispielsweise von Wasser aufgeweitet und die Mineralien dadurch gequollen sind. In Hectoriten stellt neben Aluminium Magnesium einen Großteil der Kationen; zusätzlich weisen die anionischen Schichten Fluorid-Einlagerungen auf. Im Gegensatz dazu sind Bentonite reine Natriumaluminiumsilikate mit Montmorillonit-ähnlicher Grundstruktur. Sie sind ebenfalls dadurch quellbar, daß in die kationische Zwischenschichten eine mehr oder weniger große Menge Wasser, beispielsweise eine 2- bis 7-fache molare Menge, eingelagert werden kann. Kaolinit, das den Hauptbestandteil des Kaolins darstellt, hat ebenfalls eine Mehrschichtenstruktur, die aus silikatischen Anionen und Aluminium-Kationen besteht.

Außerdem können die schichtsilikathaltigen Koagulationsmittel zusätzlich zu den Alumosilikat-Komponenten eine oder mehrere Verbindungen aus der Gruppe Kieselsäuren und/oder deren Alkalimetall- und Erdalkalimetallsalze enthalten. Von den Salzen sind die Metasilikate und Pyrosilikate besonders bevorzugt, wobei die genannten Verbindungen einzeln oder in Mischungen beliebigen Verhältnisses verwendet werden können. Derartige, gegebenenfalls zusätzlich einsetzbaren Verbindungen sind vorzugsweise in Gesamtmengen von 0,1 bis 30 Gew.-%, insbesondere 10 bis 20 Gew.-% - bezogen auf die Gesamtmenge des schichtsilikathaltigen Koagulationsmittels - in den Koagulationsmitteln zugegen. Talkum, ein Magnesiumsilikat der ungefähren Zusammensetzung Ng₃(OH)₂Si₄O₁₀, sei als bevorzugtes Beispiel genannt.

Weitere Bestandteile der schichtsilikathaltigen Koagulationsmittel können Erdalkalimetallsalze, vorzugsweise in einer Menge von 0,1 bis 30 Gew.-%, insbesondere 5 bis 25 Gew.-%, sein. Im Sinne dieser Erfindung werden die Salze von Calcium und/oder Magnesium, insbesondere Calciumcarbonat, bevorzugt eingesetzt.

Prinzipiell müssen die Komponenten des schichtsilikathaltigen Koagulationsmittel so beschaffen sein, daß sie in einer Weise wechselwirken, die das Koagulationsergebnis synergistisch verbessern können. Als solche sind beispielsweise Cyanamide und/oder Dicyandiamid und/oder Calciumcyanamid, vorzugsweise in einer Menge von 0,1 bis 10 Gew.-%, zu nennen. Diese Verbindungen sind für die Verwendung in der Lackkoagulation aus der DE-A-34 12 763 der Anmelderin bekannt und dort genauestens beschrieben, so daß sie an dieser Stelle keiner weiteren Erklärung bedürfen.

Außerdem können die aus der Lehre der DE-A-33 16 878 der Anmelderin bekannten Polyethylenimine und/oder deren protonierte oder kationisch durch Alkylierung modifizierten Derivate, bevorzugt in einer Menge von 0,1 bis 10 Gew.-%, eingesetzt werden. Die Molekularmassen der Polyethylenimine liegen bevorzugt im Bereich von etwa 5 x 10 ⁴ bis 5 x 10 ⁷ D.

Im Rahmen der vorliegenden Erfindung können als Wirk- und/oder Hilfsstoffe die aus der Lehre der deutschen Patentanmeldung DE-A-40 25 729 der Anmelderin bekannten Molybdänverbindungen eingesetzt werden. Als Molybdänverbindungen können insbesondere die wasserlöslichen Alkalimetall- und/oder Ammoniumsalze der Molybdänsäure und/oder der Isomolybdänsäure, vorzugsweise Natriummolybdat und/oder Ammoniummolybdat, in einer Menge von 0,1 bis 5 Gew.-% eingesetzt werden.

Als weitere Wirk- und/oder Hilfsstoffe können Wachse und/oder Wachsanaloga natürlichen oder synthetischen Ursprungs eingesetzt werden. Kenndaten der genannten Wachse können der Fachliteratur entnommen werden, beispielsweise "Ullmanns Encyclopädie der technischen Chemie", Band 24, Seite 1 bis 49, 4. Auflage 1984, "Fette, Seifen, Anstrichmittel" 67 (1965) 334 ff. und "Römpps Chemie-Lexikon, Franck'sche Verlagsbuchhandlung, Stuttgart, S. 4562, 8. Auflage, 1988.

Bevorzugt werden als Wachsanaloga Ester von gesättigten und/oder ungesättigten Fettsäuren mit 8 bis 22 C-Atomen, bevorzugt mit 12 bis 18 C-Atomen, mit Fettalkoholen mit 8 bis 22 C-Atomen, bevorzugt mit 12 bis 18 C-Atomen, oder mit Glycerin verwendet. Aus der Gruppe der in Frage kommenden Verbindungen sind Myricylpalmitat und Talg besonders bevorzugt.

Als Silikate werden für diesen Zweck beispielsweise Wassergläser oder lösliche oder unlösliche Salze von Orthokieselsäure und deren Kondensationsprodukten bzw. deren dehydratisierten Derivaten (Metakieselsäuren) eingesetzt. Als Phosphate finden lösliche oder unlösliche Salze von Orthophosphorsäure und deren Kondensationsprodukten bzw. deren dehydratisierten Derivaten Verwendung.

Als Emulgator- und/oder Dispergierhilfsmittel können grundsätzlich alle für emulgierende Zwecke in wäßrigen Lösungen bekannten Verbindungen verwendet werden, sofern sie mit den anderen Inhaltsstoffen verträglich sind. Bevorzugte Emulgatoren sind Addukte von Alkylenoxiden an Fettsäuren oder Fettalkohole, die als Einzelverbindungen oder auch in beliebigen Mischungen miteinander verwendet werden können. Bevorzugt sind Addukte von Ethylenoxid an Fettsäuren wie Ölsäure und Talgfettsäure, wobei das Molverhältnis Ethylenoxid : Fettsäure im Bereich von 1 bis 5 : 1 liegt. Emulgatoren aus der Gruppe dieser Verbindungen zeigen in der wäßrigen Phase ein hervorragendes Emulgiervermögen für die organischen Mischungskomponenten und sichern für die Koagulationsmittel gemäß der Erfindung gutes Entklebe-Vermögen und einen problemlosen Koagulat-Austrag. Besonders bevorzugt ist ein Addukt von 1 bis 4 Mol Ethylenoxid an Ölsäure.

Weitere Hilfsstoffe für die Konfektionierung sind Alkanolamine und/oder Amine. In bevorzugten Ausführungsformen weisen diese im Alkylenrest bzw. Alkylrest 1 bis 3 C-Atome auf. Besonders bevorzugt wird eine bzw. werden mehrere Verbindung(en) aus der Gruppe Monoethanolamin, Diethanolamin, Triethanolamin, Monoisopropanolamin, Diisopropanolamin und Triisopropanolamin eingesetzt.

Speziellen Anforderungen, wie z. B. der Einstellung eines bestimmten pH-Wertes oder der antimikrobiellen Ausrüstung der Koagulationsmittel, kann dadurch Rechnung getragen werden, daß die schichtsilikathaltigen Koagulationsmittel spezielle Hilfsstoffe enthalten. So können gegebenenfalls Borsäure, die antimikrobielle Wirkung besitzt und gegebenenfalls auch zur pH-Wert-Einstellung beitragen kann, sowie Biozide, z. B. Formaldehyd, Isothiazoline und deren Derivate sowie Pyridin-N-oxid und dessen Derivate, zugesetzt werden. Zur pH-Wert-Einstellung dienen gegebenenfalls auch Phosphorsäure, organische Säuren wie Citronensäure und andere, nichtkorrosive Säuren bzw. deren saure Salze. Als weitere mögliche Bestandteile der schichtsilikathaltigen Koagulationsmittel kommen auch Korrosionsinhibitoren und Antischaummittel in Frage. Als Korrosionsinhibitoren werden wasserlösliche Salze von Phosphonsäuren und Zinksalze, bevorzugt das Natriumsalz der 2-Phosphonobutan-1,2,4-tricarbonsäure oder das Zinksalz des 2-Pyridinthiol-1-oxids, verwendet. Als Antischaummittel hat sich neben den für diesen Zweck aus dem Stand der Technik bekannten Mitteln, wie mineralölhaltige Entschäumer, das mineralölfreie Produkt Dehydran F ^{R} (Fa. Henkel KGaA) bewährt.

Die genannten schichtsilikathaltigen Koagulationsmittel können im allgemeinen Lackoverspray beliebiger Herkunft koagulieren. So können als Lacke beispielsweise Füller, Grundierungen, Decklacke und Klarlacke unterschiedlichster chemischer Zusammensetzung eingesetzt werden. Als zusätzliche Lackbestandteile kommen noch Pigmente, Füllstoffe, Korrosionsschutzpigmente etc. in Frage. Die Lacke können noch Harze wie Alkyd-, ölfreie Polyester-, Acrylat-, Melamin-, Epoxid- oder Polyurethanharze sowie organische Lösungsmittel, wie beispielsweise gängige aromatische und aliphatische Verbindungen, sowie Glykolester, Alkohole und Wasser enthalten.

In einer bevorzugten Ausführungsform der Erfindung wird ein vollständig entklebtes, förderbares, schichtsilikathaltiges Lackkoagulat mit einem Festkörpergehalt von 20 bis 95 Gew.-%, vorzugsweise 30 bis 50 Gew.-%, in Form einer wäßrigen Aufschlämmung, als Schlamm oder als Pulver in dem erfindungsgemäßen Verfahren eingesetzt.

In einer weiteren bevorzugten Ausführungsform der vorliegenden Erfindung wird die wäßrige Aufschlämmung, der Schlamm oder das Pulver des entklebten, schichtsilikathaltigen Lackkoagulates bei Temperaturen von 20 bis 100 °C, vorzugsweise 60 bis 80 °C, bei einem Vakuum von 0,01 bis 900 mbar, vorzugsweise 10 bis 100 mbar, mit der Maßgabe getrocknet, daß sich ein Restwassergehalt von weniger als 10 Gew.-%, vorzugsweise weniger als 5 Gew.-%, einstellt. Prinzipiell kann auch bei höheren Temperaturen gearbeitet werden, wobei jedoch gewährleistet sein muß, daß das Lackkoagulat nicht vollständig ausgehärtet ist.

In einer weiteren bevorzugten Ausführungsform des erfindungsgemäßen Verfahrens wird das getrocknete Lackkoagulat einer Kältebehandlung bei Temperaturen von vorzugsweise -150 bis -220 °C mit flüssigem Stickstoff, flüssigem Sauerstoff und/oder flüssiger Luft, vorzugsweise flüssigem Stickstoff, in 5 bis 60 Min., vorzugsweise 20 bis 40 Min., unterworfen. Bei dieser Kältebehandlung findet eine Kaltversprödung des Lackkoagulates statt, die die weitere Verarbeitung, wie das Zermahlen, wesentlich erleichtert. Selbstverständlich kann die Kältebehandlung auch unter Vakuumbedingungen in Form eines Gefriertrocknungsprozesses durchgeführt werden.

Als Kern des erfindungsgemäßen Handelns erweist sich nunmehr die Erkenntnis, daß sich das kalte, spröde Lackkoagulat direkt nach der Kältebehandlung durch Naß-, Druck- oder Prallzerkleinerung bei Raumtemperatur auf eine Korngröße von 1 bis 500 µm, vorzugsweise 5 bis 50 µm, zermahlen läßt. Dies ist insofern überraschend, da sich viele Lackkoagulate infolge ihrer Klebrigkeit nur unzureichend zermahlen lassen und in vielen Fällen zu einem unerwünschten Verkleben der Mühle oder der Mahlwerkzeuge führen.

Ein weiterer Gegenstand der vorliegenden Erfindung betrifft die Verwendung der aufgearbeiteten Lackkoagulate als Grundbestandteil, Zuschlags- oder Füllstoffe in Lacken und Farben.

Im Sinne der vorliegenden Erfindung können die nach dem erfindungsgemäßen Verfahren aufgearbeiteten Lackkoagulate somit sowohl als Grundbestandteil (100 %-iges Recycling) als auch anteilsmäßig in Form von Zuschlags- oder Füllstoffen wiederverwendet werden.

In einer bevorzugten Ausführungsform der vorliegenden Erfindung wird das nach dem erfindungsgemäßen Verfahren aufgearbeitete schichtsilikathaltige Lackkoagulat als Lack- und Farbenrohstoff direkt mit einem Lacklösemittel und/oder Wasser dispergiert, nach den gängigen Standardmethoden auf eine Metall- oder Kunststoffoberfläche aufgebracht, eingebrannt und als Füller, Grundierung, Decklack und/oder Klarlack in der Automobilindustrie eingesetzt.

Die folgenden Beispiele sollen das erfindungsgemäße Verfahren zur Aufarbeitung eines schichtsilikathaltigen Lackkoagulates dokumentieren sowie die Verwendung des Lackkoagulates als Lackrohstoff anhand eines charakteristischen Beispiels belegen.

### Beispiele

### Herstellung und Aufarbeitung eines schichtsilikathaltigen Lackkoagulates

### Beispiel 1

- Lacktyp:: lösungsmittelhaltige Füllerqualität (Fa. Mehnert und Veeck, Typ AF 2000263)
- Koaguliermittel:: VR 7821-3, Lieferant Fa. Henkel (auf Basis von ca. 85 Gew.-% Schichtsilikaten und 15 Gew.-% Dicyandiamid)

Der Lack wurde in einer ESKA-Anlage (Fa. Dürr) nach den üblichen Bedingungen der Automobilindustrie koaguliert.
Konsistenz des Lackkoagulates: vollständig entklebt
Festkörpergehalt des Lackkoagulates: 44 %.

### Aufarbeitung:

- Trocknen im Vakuum bei 80 °C und einem Druck von 20 mbar Restwassergehalt: ca 3 %
- Kaltversprödung des getrockneten Materials mit flüssigem Stickstoff Verweilzeit: 30 Min.
- Mahlen des kaltversprödeten Materials mit einer Luftstrahlmühle bis auf eine Korngröße von ca. 10 µm unmittelbar im Anschluß an die Kältebehandlung.

### Verwendung des aufgearbeiteten Lackkoagulates aus Beispiel 1 als 100 %-iger Lackrohstoff

- Aufmischen des gemahlenen Lackkoagulates (50 Gew.-%) mit einem Lösemittelgemisch (50 Gew.-%) aus Butylacetat und Xylol (1 : 1)
- Dispergieren des Lösemittel-Recyclinglackoagulat-Gemisches in einer Schüttelmaschine.
   Behandlungszeit: 30 Minuten
   Gerät: "Skandes"-Schüttelmaschine, Typ 3 A5-20
- erhaltene Korngröße gemäß der Hegmann-Methode: ca 40 µm
- Auftrag des so erhaltenen Recyclinglackes Schichtdicke des Lackauftrages
   (Glasplatte): 250 µm (Lösemittel, naß)
   Methode: Rakel-Filmaufziehgerät
   Ablüftzeit: 10 Minuten bei Raumtemperatur
- Einbrennvorgang: 10 Minuten, 150 °C im Umlufttrockenschrank
- Schichtdicke nach dem Einbrennen: ca. 30 - 40 µm Methode: Erichsen-Uhr
- Pendelhärte nach König (Erichsen): 80-90 sec. Vorgabe der Automobilindustrie im Durchschnit: 100 sec. ± 10.

## Patentansprüche

1. Verfahren zur Aufarbeitung von Lackkoagulaten, auf der Basis von mit schichtsilikathaltigen Koagulationsmitteln in an sich bekannter Weise koaguliertem Lackoverspray, dadurch gekennzeichnet, daß man das schichtsilikathaltige, entklebte Lackkoagulat im Vakuum bei Temperaturen bis 100 °C trocknet, das getrocknete Lackkoagulat Temperaturen von 0 bis -270 °C unterwirft und unmittelbar anschließend das kalte, spröde Lackkoagulat zermahlt.

2. Verfahren nach Anspruch 1, dadurch gekennzeichnet, daß das schichtsilikathaltige Koagulationsmittel
a) 1 bis 100 Gew.-% wenigstens eines Alumosilikates,
b) 0 bis 30 Gew.-% wenigstens einer Kieselsäure oder ihrer Alkalimetall- und/oder Erdalkalimetallsalze,
c) 0 bis 30 Gew.-% wenigstens eines Erdalkalimetallsalzes,
d) 0 bis 10 Gew.-% eines Cyanamides, Dicyandiamides und/oder Calciumcyanamides,
e) 0 bis 10 Gew.-% eines protonierten oder kationisch modifizierten Polyethylenimins und
f) 0 bis 19 Gew.-% wenigstens eines Wirk- und/oder Hilfsstoffes, ausgewählt aus der von Molybdänverbindungen, Wachsen und/oder Wachsanaloga, Silikaten, Phosphaten, Emulgator- und/oder Dispergierhilfsmitteln, Entschäumern, Korrosionsinhibitoren, Bioziden, Säuren, Aminen und/oder Wasser gebildeten Gruppe,
enthält.

3. Verfahren nach Anspruch 2, dadurch gekennzeichnet, daß das schichtsilikathaltige Koagulationsmittel wenigstens ein Alumosilikat, aus der von Beidellit, Bentonit, Dickit, Halloysit, Hectorit, Kaolinit, Montmorillonit, Nakrit und Nontronit, bevorzugt Bentonit und/oder Hectorit, gebildeten Gruppe enthält.

4. Verfahren nach Anspruch 1 bis 3, dadurch gekennzeichnet, daß man ein schichtsilikathaltiges, entklebtes und förderbares Lackkoagulat mit einem Festkörpergehalt von 20 bis 95 Gew.-%, vorzugsweise 30 bis 50 Gew.-%, einsetzt.

5. Verfahren nach den Ansprüchen 1 bis 4, dadurch gekennzeichnet, daß man das Lackkoagulat im Vakuum bei einem Druck von 0,01 bis 900 mbar, vorzugsweise 10 bis 100 mbar, und bei Temperaturen von 20 bis 100 °C, vorzugsweise 60 bis 80 °C, mit der Maßgabe trocknet, daß sich ein Restwassergehalt von weniger als 10 Gew.-%, vorzugsweise weniger als 5 Gew.-%, einstellt.

6. Verfahren nach den Ansprüchen 1 bis 5, dadurch gekennzeichnet, daß man das getrocknete Lackkoagulat einer Kältebehandlung bei Temperaturen von -150 bis -220 °C, mit flüssigem Stickstoff, flüssigem Sauerstoff und/oder flüssiger Luft, vorzugsweise mit flüssigem Stickstoff, in 5 bis 60 Min., vorzugsweise 20 bis 40 Min., unterwirft.

7. Verfahren nach den Ansprüchen 1 bis 6, dadurch gekennzeichnet, daß man das kalte, spröde Lackkoagulat durch Naß-, Druck- oder Prallzerkleinerung auf eine Korngröße von 1 bis 500 µm, vorzugsweise 5 bis 50 µm, bei Raumtemperatur zermahlt.

8. Verwendung der aufgearbeiteten Lackkoagulate nach den Ansprüchen 1 bis 7 als Grundbestandteil, Zuschlags- oder Füllstoffe in Lacken und Farben.

9. Verwendung nach Anspruch 8, dadurch gekennzeichnet, daß man das aufgearbeitete Lackkoagulat als Lack- und Farbenrohstoff mit Lacklösemittel und/oder Wasser dispergiert, nach Standardmethoden auf eine Metall- oder Kunststoffoberfläche aufträgt, einbrennt und als Füller, Grundierung, Decklack und/oder Klarlack in der Automobilindustrie einsetzt.

## Claims

1. A process for working up lacquer coagulates based on lacquer overspray coagulated in known manner with coagulants containing layer silicates, characterized in that the denatured lacquer coagulate containing layer silicates is dried in vacuo at temperatures of up to 100°C, the dried lacquer coagulate is exposed to temperatures of 0 to -270°C and the cold brittle lacquer coagulate is ground immediately afterwards.

2. A process as claimed in claim 1, characterized in that the layer-silicate-containing coagulant contains
a) 1 to 100% by weight of at least one alumosilicate,
b) 0 to 30% by weight of at least one silica or an alkali metal salt and/or alkaline earth metal salt thereof,
c) 0 to 30% by weight of at least one alkaline earth metal salt,
d) 0 to 10% by weight of a cyanamide, dicyanodiamide and/or calcium cyanamide,
e) 0 to 10% by weight of a protonated or cationically modified polyethylene imine and
f) 0 to 19% by weight of at least one active substance and/or auxiliary selected from the group consisting of molybdenum compounds, waxes and/or wax analogs, silicates, phosphates, emulsifiers and/or dispersion aids, foam inhibitors, corrosion inhibitors, biocides, acids, amines and/or water.

3. A process as claimed in claim 2, characterized in that the layer-silicate-containing coagulant contains at least one alumosilicate from the group consisting of beidellite, bentonite, dickite, halloysite, hectorite, kaolinite, montmorillonite, nacrite and nontronite, preferably bentonite and/or hectorite.

4. A process as claimed in claims 1 to 3, characterized in that a layer-silicate-containing, denatured and pumpable lacquer coagulate having a solids content of 20 to 95% by weight and preferably 30 to 50% by weight is used.

5. A process as claimed in claims 1 to 4, characterized in that the lacquer coagulate is dried in vacuo under a pressure of 0.01 to 900 mbar and preferably 10 to 100 mbar and at temperatures of 20 to 100°C and preferably 60 to 80°C, with the proviso that a residual water content of less than 10% by weight and preferably less than 5% by weight is established.

6. A process as claimed in claims 1 to 5, characterized in that the dried lacquer coagulate is subjected to a low-temperature treatment at temperatures of -150 to -220°C with liquid nitrogen, liquid oxygen and/or liquid air, preferably with liquid nitrogen, over a period of 5 to 60 minutes and preferably 20 to 40 minutes.

7. A process as claimed in claims 1 to 6, characterized in that the cold brittle lacquer coagulate is size-reduced to a particle size of 1 to 500 µm and preferably 5 to 50 µm at room temperature by wet, pressure or impact size reduction.

8. The use of the lacquer coagulates worked up by the process claimed in claims 1 to 7 as a principal ingredient, additives or fillers in lacquers and paints.

9. The use claimed in claim 8, characterized in that the lacquer coagulate is dispersed as a lacquer or paint raw material with lacquer solvents and/or water, applied by standard methods to a metal or plastic surface, stoved and used as a filler, primer, finishing lacquer and/or clear lacquer in the automotive industry.

## Revendications

1. Procédé de recyclage de caillots de laques à base d'overspray de laque coagulé d'une manière connue en soi, à l'aide d'agents de coagulation contenant des silicates stratifiés, caractérisé en ce que l'on sèche le caillot de laque décollé, contenant des silicates stratifiés, dans le vide, à des températures allant jusqu'à 100 °C, soumet le caillot de laque séché à des températures de 0 à -270 °C, et broie finement le caillot de laque froid et fragile immédiatement à la suite.

2. Procédé selon la revendication 1, caractérisé en ce que l'agent de coagulation contenant des silicates stratifiés renferme
a) 1 à 100 % en poids d'au moins un aluminosilicate,
b) 0 à 30 % en poids d'au moins un acide silicique ou de ses sels de métaux alcalins et/ou de métaux alcalino-terreux,
c) 0 à 30 % en poids d'au moins un sel de métal alcalino-terreux,
e) 0 à 10 % en poids d'un cyanamide, d'un dicyanodiamide et/ou d'un cyanamide de calcium,
e) 0 à 10 % en poids d'une polyéthylènimine protonisée ou à modification cationique et
f) 0 à 19 % en poids d'au moins une substance active et/ou adjuvante, sélectionnée parmi le groupe constitué des composés de molybdène, des cires et/ou des analogues de cires, des silicates, des phosphates, des adjuvants émulsionnants et/ou dispersants, des agents antimousse, des inhibiteurs de corrosion, des biocides, des acides, des amines et/ou de l'eau.

3. Procédé selon la revendication 2, caractérisé en ce que l'agent de coagulation contenant des silicates stratifiés renferme au moins un aluminosilicate appartenant au groupe constitué de la beidellite, de la bentonite, de la dickite, de l'halloysite, de l'hectorite, de la kaolinite, de la montmorillonite, de la nakrite et de la nontronite, de préférence la bentonite et/ou l'hectorite.

4. Procédé selon les revendications 1 à 3, caractérisé en ce que l'on met en oeuvre un caillot de laque contenant des silicates stratifiés, décollé et extractible, avec une concentration en matières solides de 20 à 95 % en poids, de préférence de 30 à 50 % en poids.

5. Procédé selon les revendications 1 à 4, caractérisé en ce que l'on sèche le caillot de laque dans le vide, sous une pression de 0,01 à 900 mbars, de préférence de 10 à 100 mbars, et à des températures de 20 à 100 °C, de préférence de 60 à 80 °C, à condition d'ajuster une concentration en eau résiduelle inférieure à 10 % en poids, de préférence inférieure à 5 % en poids.

6. Procédé selon les revendications 1 à 5, caractérisé en ce que l'on soumet le caillot de laque séché à un traitement par le froid à des températures, de préférence, de -150 à - +220 °C, par de l'azote liquide, de l'oxygène liquide et/ou de l'air liquide, de préférence avec de l'azote liquide, en 5 à 60 minutes, de préférence en 20 à 40 minutes.

7. Procédé selon les revendications 1 à 6, caractérisé en ce que l'on broie finement le caillot de laque froid et fragile à température ambiante, par broyage à l'eau, sous pression ou par chocs, jusqu'à une grosseur de grain de 1 à 500 µm, de préférence de 5 à 50 µm.

8. Utilisation des caillots de laque recyclés, selon les revendications 1 à 7, comme constituant de base, ou comme agrégats ou charges de laques et de peinture.

9. Utilisation selon la revendication 8, caractérisée en ce que l'on disperse le caillot de laque recyclé avec un solvant de laque et/ou avec de l'eau, comme matière première de laque et de peinture, on l'applique selon les méthodes standard courantes sur une surface en métal ou en plastique, on le cuit et on le met en oeuvre dans l'industrie automobile, comme laque chargée, couche de fond, laque de finition et/ou laque transparente.
